# EUROPEAN PATENT APPLICATION

(11) **EP 1 123 910 A2**
(43) Date of publication of application: **16.08.2001**
(21) Application number: 01200380.2
(22) Date of filing: 05.02.2001
(51) Int. Cl.: C05G 3/00, C05C 7/02, C05D 9/00, C05D 5/00

(54) **Method for the preparation of plant nutrient granules**

(30) Priority: 11.02.2000 NL 1014355
(71) Applicant: DSM N.V., 6411 TE Heerlen (NL)
(72) Inventor: Pockele, Stefaan, 80550 Zwevegem (BE); Schaafsma, Stefan, 6132 SM Sittard (NL)
(74) Representative: Jacobs, Monique S.N.

(57) **Abstract**

Method for the preparation of granules of inorganic nutrients in which the inorganic nutrient is subjected to a granulation in the presence of a polysaccharide, calcium and nitrate. Preferably a solution of Ca(NO₃)₂ in water is used. The nutrient is chosen for example from the group formed by potassium sulphate, magnesium sulphate, ammonium sulphate, potassium nitrate, calcium nitrate, sodium chloride and potassium chloride. The quantity of polysaccharide used usually lies between 0.1 and 10 wt.%, calculated on the total quantity of final product. The invention also relates to granules obtainable with such a method.

## Description

The invention relates to a method for the preparation of granules of an inorganic nutrient in which the inorganic nutrient is subjected to a granulation in the presence of a polysaccharide, calcium and nitrate, and in which at least part of the calcium and/or nitrate is added to the granulation as a solution containing Ca ions and/or NO₃ ions. The invention also relates to such granules.

Mineral fertilisers are generally marketed as granules with a grain size of 2 to 5 mm. A large grain size and a uniform size distribution are important for blending of the products. However,some straight products are available only in powder form or in crystal form. For the application of blends it is highly desirable, if not necessary, for the individual components to be available in larger, strong particles with a high nutrients content. In addition, on account of caking and dust problems it is also desirable to have the nutrients available in the form of larger particles.

Examples of inorganic nutrients as meant in the framework of the invention are inorganic salts, in particular sulphates, for example potassium sulphate, magnesium sulphate and ammonium sulphate; and chlorides, for . example sodium chloride and potassium chloride; or mixtures of these compounds, optionally in combination with other components, for example trace elements of Se, Cu or Co, or auxiliaries, for example clay, that enhance the stability and strength of the granules. A problem of these nutrients is that they are difficult to granulate. The invention therefore in particular relates to granules and granulation of nutrients that are difficult to granulate, in particular nutrients in which the nutrient is in the kation form.

The invention provides a method in which relatively large granules with a relatively high nutrient content can be obtained using calcium and nitrate as a granulation aid. These nutrients are commercially available in powder form and can be used as such in the method according to the invention. The combination of a polysaccharide with calcium and nitrate ions gives a strongly gelling and binding character. Neither the presence of calcium ions separately nor that of nitrate ions separately results in this strong character of the binding agent.

It is known to compact for example sulphate powder. The disadvantage of the compacted particles is that they usually are angular and still give rise to dust formation during transport and processing. In addition, ammonium sulphate, for example, is also known in crystal form. However, this crystal form is so different from other granules that are used in bulk blends of mineral fertilizers that no blends of good quality can be prepared.

The granulation, for example steam granulation, can be carried out in various, generally known ways, for example in a pan or a drum granulator. On account of the solubility of the nutrients it will usually be decided to granulate nutrients as a solid, (ground) powder, with for example water and/or steam.

Preferably a polysaccharide is chosen with a combination of a high solubility of the polysaccharide in water and a high viscosity of the polysaccharide. A higher solubility can compensate a lower viscosity, and vice versa. Preferably the quantity of polysaccharide used is as small as possible on account of on the one hand the cost aspect and on the other hand the need to achieve the highest possible nutrient content in the granule. The optimum quantity of polysaccharide to be used strongly depends on the choice of the polysaccharide. The suitable effective amount of polysaccharide can readily be determined by one skilled in the art. In practice the effective quantity of polysaccharide in the nutrient granule will commonly lie between 0.01 and 10 wt.% polysaccharide, preferably between 0.1 and 3 wt.% calculated with respect to the total granule. It is unnecessary for the polysaccharide to be used in completely dissolved form in the granulation. The polysaccharide can also be used as a slurry. Suitable examples of polysaccharides to be used are (pre-starched) potato, wheat or corn starch, gum arabic, cellulose, (weak) vinasses, methylcellulose and carboxymethylcellulose. The potato starch preferably consists of partially soluble, pre-starched starch, the starch being partially cross-linked through a physical or chemical modification for better heat and shear resistance during granulation. The amount of (pre-starched) starch to be used will in practice usually be higher than the amount of carboxymethylcellulose to be used. The amount of starch to be used is preferably higher than 0.3 wt.%.

Vinasse is often obtained as a side product in fermentation processes after removal of the primary product as a dilute byproduct broth (weak vinasses). The weak vinasse may be concentrated to give vinasse. Vinasse as such is often used as potassium fertilizer. After precipitation of potassium as e.g. potassium sulphate, depotassified vinasse and potassium sulphate are obtained. Both depotassified vinasse and (weak) vinasse may be used in the process of the present invention.

The quantity of calcium to be used is preferably larger than 0.05 wt.%, calculated as Ca in the final product, in particular larger than 0.1 wt.%. The quantity of nitrate to be used is preferably larger than 0.15 wt.%, in particular larger than 0.3 wt.%, calculated as NO₃⁻ relative to the total final product. The Ca and NO₃ ions are preferably added in the form of a solution of Ca(NO₃)₂ in water. However, they can also be added in the form of different, water-soluble salts, for example calcium chloride and sodium nitrate.

The granulation is preferably carried out in the presence of sulphate ions. This results in an increased granulation efficiency. The quantity of sulphate ions to be used is preferably larger than 0.1 weight percent of SO₄-, calculated relative to the total final product.

The following is an example of a preferred embodiment of the method according to the invention. First a solid phase and a liquid phase are prepared. The solid phase contains for example approximately 70 to 95 % by weight of an inorganic salt (nutrient), approximately 0 to 15 % by weight of a sulphate salt, 0.1 to 5 % by weight of a water-soluble polysaccharide, 0.1 to 5 % by weight of a water-soluble calcium salt, 0.2 to 5 % by weight of a water-soluble nitrate salt and 0 to 5 % by weight of a granulation promoting aid, for example clay. A preferred composition contains 85 to 95 % by weight inorganic salt (nutrient), 0 to 5 % by weight sulphate salt, 1 to 3 % by weight water-soluble polysaccharide, 0 to 3 % by weight water-soluble calcium salt, 0 to 3 % by weight water-soluble nitrate salt and 0 to 4 % by weight granulation improving auxiliary.

The liquid phase for example contains approximately 0 to 10 % by weight polysaccharide, 0 to 15 % by weight water-soluble calcium salt and 0 to 15 % by weight water-soluble nitrate salt. A preferred composition contains 3 to 6 % by weight polysaccharide, 10 to 14 % by weight calcium salt and 10 to 14 % by weight nitrate salt. The liquid phase is added to the solid phase in a usable quantity. The quantity is dependent on the granulatability of the mixture, but in practice the water content of the mixture preferably varies between 4 and 12 % by weight water. When use is made of more concentrated solutions, extra water or steam can be added. The way in which the solution is added to the solid mixture is not critical to the practicability of this invention, though it is prefererred to finely divide the liquid over the powder mixture in the granulator. The solution is preferably prepared by first heating water to 80°C and then adding the salts and the polysaccharide while stirring vigorously.

After the granulation the granules can be dried in a known way, for example in a rotating drying drum with a warm air flow.

The moisture content of the granules finally preferably lies between 0.7 and 1 % by weight as then generally a hard and stable granule is obtained.

With the method according to the invention stable, strong nutrient granules are obtained. The granules are preferably submitted to a screening in order to remove dust (small particles) and coarse product. In practice the particle size distribution of the particles, after removal of dust and coarse product, is usually chosen to have a lower limit between 1 and 3 mm, preferably between 1.5 and 2.5 mm, and an upper limit between 4 an 8 mm, preferably between 4 and 6 mm, depending on the market requirements. In principle other sizes are also possible. A particle size, for instance, between 1 and 6 mm means in the framework of this invention, that less than 2 wt.%, preferably less than 1 wt.%, of the granules has a size lower than 1 mm and less than 4 wt.%, preferably less than 2 wt.%, of the granules has a particle size larger than 6 mm.

The invention will be now explained on the basis of the examples, without however being limited thereby.

### Example I

As an inorganic salt potassium sulphate was used with a size between 0.1 mm and 1.2 mm. This salt was mixed intensely with 2% by weight starch. In some runs this mixture was supplemented with auxiliary agents e.g. clay and calcium nitrate. The total quantity amounted to six kilograms. The composition of this solid phase is given in table 1.

The solid phase was wetted in a moving granulation drum by spraying a liquid phase. The liquid phase was so composed that a moisture content of around 10 wt.% water was anticipated; the composition of the liquid phase in the different runs is also given in table 1.

After granulation the granules were dried for 20 minutes in a 400 (mm) x 1,500 (mm) rotating drying drum at a speed of 12 rpm, an air inlet of 400°C. The product, which then had a temperature of around the 100°C and a moisture content lower than or equal to 1 wt.%, was screened off using a 2 mm screen and a 4 mm screen.

Table 1 demonstrates the effect that the different compositions of the solid phase and the liquid phase have on the efficiency. The efficiency is represented here by the granulometry of the granules that fall from the drying drum. The higher the fraction smaller than 2 mm, the more product must be conveyed back to the granulation drum and the less the (economic) efficiency will be (efficiency: weight of the fraction of the granules larger than 2 mm / total weight of the granules).

As starch use was made of a potato starch that consisted of partially soluble pre-starched starch, the starch being partially cross-linked. The calcium nitrate contained one and a half mole eq. of crystal water and the calcium chloride contained 2 mole eq. of crystal water.

The solutions were prepared in the following way; water was heated to a temperature of 80-90°C. While the liquid was vigorously stirred (mechanical stirrer, 1500 rpm), the binders and/or auxiliary materials were added together. The liquid was kept at a temperature of 80°C.

**Tabel I**

| Solid phase | | | | | Liquid phase | | | | Efficiency (%) |
|---|---|---|---|---|---|---|---|---|---|
| Weight % | | | | | | | | | |
| No. | K₂SO₄ | Starch | Clay | Ca(NO)₃ | Starch | Ca(NO)₃ | NaNO₃ | CaCl₂ | |
| 1 | 89.6 | 2 | 4 | | 1.2 | 2.4 | | | 69 |
| 2 | 94.0 | 2 | | | 1 | | 1.2 | 1 | 65.5 |
| 3 | 94 | 2 | | | 1.1 | 2.2 | | | 63.1 |
| 4 | 89.8 | 2 | 4 | | 1.1 | 2.2 | | | 61 |
| 5 | 89 | 2 | 4 | 3 | 1.1 | | | | 46.8 |
| 6 | 94.2 | 2 | | | 0.9 | | 1.9 | | 33.1 |
| 7 | 95.5 | 2 | | | 0.8 | | | | 29.2 |
| 8 | 96.7 | 0.1 | | | | 2.2 | | | 1.9 |
| NB: When added up, the weight percentages are less than 100 percent; the difference is the water content of the granules. | | | | | | | | | |

Run 1, 3 and 4 demonstrate that the combination of starch with calcium and nitrate ions yields a good efficiency. Run 2 demonstrates that it is not the calcium nitrate product but definitely the calcium and nitrate ions that are responsible for the positive combination. This is confirmed in run 6, in which only the nitrate ion is present, and thus yields a noticeably lower efficiency. Run 7 demonstrates that few granules of the required dimensions are formed when use is made only of starch as the binding agent. Run 8 demonstrates that calcium nitrate alone is not a binding agent.

Run 5 shows that calcium nitrate is preferably added in the liquid phase, since the efficiency of run 5 is lower than that of run 4, where the calcium and nitrate ions are released slowly.
NB: To demonstrate that the granules are hard, the breaking strength of the granules in the screen fraction 3.35-4.00 of run 1 and 3 was determined. For run 1 the breaking strength was 40 N, for run 3 it was 31 N.

### Example II

Potassium chloride was used as the inorganic salt. The test was carried out as described in example I with the compositions as noted in table II.

Ammonium sulphate had a screening range smaller than 2 mm, with a d50 of 1.1 mm.

**Table II**

| Solid phase | | | | Liquid phase | | Efficiency |
|---|---|---|---|---|---|---|
| weight% | | | | | | |
| No. | KCI | Starch | (NH₄)₂SO4 | Starch | Ca(NO)₃ | |
| 9 | 90.5 | 2.1 | 4 | 0.9 | 1.8 | 78.2 |
| 10 | 94.3 | 2.1 | | 0.9 | 1.8 | 69.1 |

Run 10 indicates that the combination of starch and calcium nitrate gives an excellent efficiency. Run 9 shows that the presence of a sulphate ion still gives an improvement.

### Example III

Potassium sulphate was used as the organic salt and CMC(carboxymethylcellulose) as the binding agent. The CMC used here was a sodium carboxymethyl cellulose with a viscosity of 2,000 mPa.s at a concentration of 20 wt.% percent dry substance in water at a temperature of 25°C. The test was carried out as described in example I with the compositions as noted in table III.

**Table III**

| Solid phase | | | | Liquid phase | | Efficiency |
|---|---|---|---|---|---|---|
| Weight % | | | | | | |
| No. | K₂SO₄ | CMC | Clay | CMC | Ca(NO)₃ | |
| 11 | 96.5 | | | 0.6 | 2 | 55.1 |
| 12 | 96.4 | 0.4 | | 0.2 | 2 | 41.3 |
| 13 | 96.3 | 0.4 | | 0.2 | | 10.5 |

Run 11 demonstrates that the combination of CMC and calcium nitrate, when brought into solution, delivered a good yield. This is despite the low concentration of CMC. In the absence of calcium nitrate (run 13) the binding force of CMC is minimal.

### Example IV

Depotassified vinasse was used as binding agent. The vinasse contained 65 wt.% dry matter: ash (15 wt.%), crude proteine (25-30 wt.%), carbohydrates (20-25 wt.%). The test was carried out as described in Example I with the compositions as noted in table IV.

**Table IV**

| Solid phase | | | Liquid phase | | | Efficiency |
|---|---|---|---|---|---|---|
| Weight % | | | | | | |
| No. | K₂SO₄ (g) | Ca(NO₃)₂ (g) | Vinasse (g) | Water (g) | Ca(NO₃)₂ (g) | % |
| 14 | 913 | | 135 | 67 | | 36.4 |
| 15 | 913 | | 135 | 67 | 21 | 38.5 |
| 16 ¹⁾ | 903 | | 135 | 50 | 21 | 47.2 |
| 17 | 860 | 10 | 185 | 15 | 10 | 52.9 |
| 18 | 880 | | 185 | 8 | | 32.6 |

| | | | | | | |
|---|---|---|---|---|---|---|
| ¹⁾ In addition 10 g starch was added to the solid phase. | | | | | | |

## Claims

1. Process for preparing granules of an inorganic nutrient in which the inorganic nutrient is subjected to a granulation in the presence of a polysaccharide, calcium and nitrate, and in which at least part of the calcium and/or nitrate is added to the granulation as a solution containing Ca ions and/or NO₃ ions.

2. Process according to claim 1, in which a solution of Ca(NO₃)₂ in water is used as the solution containing Ca ions and/or NO₃ ions.

3. Process according to claim 1 or 2, in which the nutrient is chosen from the group formed by sulphates, chlorides or nitrates.

4. Process according to claim 3 in which the nutrient is chosen from the group formed by potassium sulphate, magnesium sulphate, ammonium sulphate, potassium nitrate, calcium nitrate, sodium chloride and potassium chloride.

5. Process according to any one of claims 1-4, in which the quantity of polysaccharide used lies between 0.1 and 10 wt.%, calculated on the total quantity of final product.

6. Process according to any one of claims 1-5, in which a sulphate is also present during the granulation.

7. Process according to any one of claims 1-6, in which the quantity of nitrate used is larger than 0.15 wt.%, calculated as NO₃⁻ relative to the total quantity of final product.

8. Process according to any one of claims 1-7, in which the quantity of calcium used is larger than 0.05 wt.%, calculated as calcium relative to the total quantity of final product.

9. Process according to any one of claims 1-8, in which steam granulation is used.

10. Granule obtainable with the method according to any one of claims 1-9.

11. Granule containing a sulphate salt chosen from the group of potassium sulphate, calcium sulphate and ammoniumsulphate, as a nutrient, a polysaccharide, a Ca salt and a NO₃ salt.

12. Granule containing as a nutrient an inorganic salt chosen from the group of potassium nitrate, sodium chloride and potassium chloride, a sulphate salt, a polysaccharide, a Ca salt and a NO₃ salt.

13. Granule according to claim 11 or 12, in which both the Ca salt and the NO₃ salt are Ca(NO₃)₂.

14. Granule according to any one of claims 11-13, in which the quantity of Ca salt calculated as Ca is larger than 0.05 wt.%.

15. Granule according to any one of claims 10-14, in which the quantity of NO₃ salt calculated as NO₃ is larger than 0.15 wt.%.

16. Granule according to any one of claims 10-15, with a particle size distribution having a lower limit between 1 and 3 mm and an upper limit between 4 and 8 mm.

17. Granule according to claim 16, with a particle size between distribution having a lower limit between 1.5 and 2.5 mm and an upper limit between 4 and 6 mm.
